# EUROPÄISCHE PATENTSCHRIFT

(11) **EP 2 653 065 B1**
(45) Veröffentlichungstag und Bekanntmachung des Hinweises auf die Patenterteilung: **10.05.2017**
(21) Anmeldenummer: 13001427.7
(22) Anmeldetag: 20.03.2013
(51) Int. Cl.: A47B 13/02, F16B 12/40, F16B 7/04, F16L 15/00, F16B 7/18

(54) **Rohrverbinder**
Pipe connector
Raccordement de tuyau

(30) Priorität: 19.04.2012 DE 202012003902 U
(43) Veröffentlichungstag der Anmeldung: 23.10.2013
(73) Patentinhaber: Urban, Günter, 59909 Bestwig (DE)
(72) Erfinder: Urban, Günter, 59909 Bestwig (DE)
(74) Vertreter: Kayser, Christoph

(56) Entgegenhaltungen:
- DE-T2- 60 116 746
- FR-A1- 2 650 050
- GB-A- 546 199
- GB-A- 2 327 247
- US-A1- 2005 232 691

## Beschreibung

Die vorliegende Verbindung betrifft einen Rohrverbinder mit einem weiblichen Aufnahmeteil zur Befestigung in einem ersten Rohrende und mit einem Steckerteil zum Befestigen in einem zweiten Rohrende, wobei das männliche Steckerteil einen Steckabschnitt und einen Befestigungsabschnitt umfasst und das Aufnahmeteil zur Aufnahme des Steckabschnitts angepasst ist, wobei das männliche Steckerteil ein Außengewinde mit einem Gewindegang aufweist und das weibliche Aufnahmeteil ein Innengewinde aufweist, die ineinander eingreifen können, derart, dass eine maximale Verbindungsstellung erreicht wird und in der maximalen Verbindungsstellung ein Stecker-Anschlag und ein Aufnahme-Anschlag aneinander anstoßen.

In GB 546 199 und GB 2 327 247 sind Rohrverbinder gemäß dem Oberbegriff des Anspruchs 1 dargestellt und beschrieben. Das Außengewinde eines Steckerteils passt jeweils mit dem Innengewinde eines Aufnahmeteils zusammen. Es gibt eine aufeinander abgestimmte Anzahl von Gewindegängen. Das Gewinde hat jeweils eine seitliche Begrenzung, die sich letztlich vom Anfang des jeweiligen Gewindes bis zum Ende fortsetzt.

In GB 546 199 läuft das jeweilige Ende eines Gewindegangs einfach aus.

In GB 2 327 247 ist eine Schulter und eine Anschlagfläche offenbart. Die Anschlagfläche für die Schulter ist so ausgerichtet, dass die Schulter gegen Ende eines Schraubvorgangs in axialer Richtung an der Anstoßfläche anstößt und sich an dieser tangential weiter bewegt bis ein zulässiges Drehmoment erreicht ist. Die beiden Gewinde fressen sich also nicht nur am Ende eines Gewindegangs an dessen Boden fest sondern auch an der Schulter. Die Drehbewegung wird durch die Anschlagfläche also nicht begrenzt, sondern wird in Abhängigkeit vom Drehmoment fortgesetzt bis die Schraubverbindung so fest sitzt, dass eine weitere Drehung zum Bruch führen würde.

Aus US 2005/0232691 A1 ist eine Schraubverbindung bekannt. Ein Steckerteil 5 (stud 5) trägt ein ganz normales Außengewinde und ein Aufnahmeteil 6 (bush 6) trägt ein ganz normales Innengewinde. Eine Begrenzung der Gewindegänge am Ende eines Schraubvorganges bzw. eine definiert maximale Verbindungsstellung ist nicht offenbart.

Aus dem Stand der Technik ist eine Vielzahl von Rohrverbindern bekannt. Es sind auch Rohre bekannt, die solche Rohrverbinder aufweisen. Es sind auch Standmöbel bekannt, die Rohre mit Rohrverbindern aufweisen.

Rohrverbinder weisen in der Regel zwei Bauteile auf, die miteinander zusammenwirken. In der Regel gibt es ein weibliches Aufnahmeteil und ein männliches Steckerteil. Die kraftschlüssige Verbindung kann durch Einrastung, durch einfache Reibschlüssigkeit oder aber durch Verschraubung herbeigeführt werden. Reine Steckverbindungen, die durch Rastung oder durch einen Reibschlüssigkeit halten, sind nicht sehr komfortabel, da die Verbindung nur sehr schwer wieder gelöst werden kann. Eine Schraubverbindung hat bei den bekannten Rohrverbindern den Nachteil, dass sie z.B. aufgrund einer hohen Übersetzung so festgedreht werden können, dass sie nur mit Hilfe von Werkzeugen wieder gelöst werden können. Es kann auch passieren, dass aufgrund der großen Übersetzung Gewinde durch die auf sie ausgeübte Kraft zerstört werden. Dies ist insbesondere dann der Fall, wenn das Material des Gewindes bzw. des Rohrverbinders aus einem weicheren Metall oder einem Kunststoff besteht.

Die Aufgabe der vorliegenden Erfindung ist bis daher, einen Rohrverbinder der eingangs genannten Art mit einem Drehschutz zu versehen, der die Gefahr einer Beschädigung des Rohrverbinders oder eines "Festfressens" von Gewindeabschnitten vermindert und der dennoch geeignet ist, vorzugsweise in Standmöbeln für eine fest aber lösbare Verbindung von Rohren zu sorgen.

Die Aufgabe wird erfindungsgemäß dadurch gelöst,
dass der Stecker-Anschlag einstückig aus dem Material des Steckabschnitts hergestellt ist und eine Gangfüllung ist, die sich über eine Reststrecke des Gewindeganges erstreckt und der Aufnahme-Anschlag ein als Kante ausgebildeter Gewindeanlauf ist und dass das Außengewinde an einem freien Ende des Steckabschnitts ausgebildet ist.

Mit den erfindungsgemäßen Rohrverbinder ist es möglich Rohre so zu verbinden, dass sie in der maximalen Verbindungsstellung eine ausreichend kraftschlüssige Verbindung aufweisen um die Rohre in der durch die maximale Verbindungsstellung vorgegebenen Raumlage sicher zu halten.

So ist es zum Beispiel besonders vorteilhaft, den erfindungsgemäßen Rohrverbinder mit Standmöbeln zu verwenden, bei denen Rohre zum Betrieb des Standmöbels miteinander lösbar verbunden werden müssen und in ihrer maximalen Verbindungsstellung zueinander eine vorbestimmte Raumlage halten sollen. Als Beispiel eines solchen Standmöbels wird hier im nachfolgenden ein Stehtisch beschrieben, wenngleich auch andere Standmöbel mit einbezogen sind, zum Beispiel Hocker, dreibeinige oder vierbeinige Tische.

Ein Stehtisch umfasst zum Beispiel eine Tischplatte, einen Fuß und zwei Standrohre. Im Betrieb sind die beiden Standrohre zusammengesteckt und über einen Rohransatz mit dem Fuß und über einen anderen Rohransatz mit der Tischplatte verbunden. Zur Beseitigung der eingangs genannten Nachteile können in den jeweiligen Rohrenden das Steckteil und das Aufnahmeteil des erfindungsgemäßen Rohrverbinders zum Einsatz kommen. Vorteilhaft ist zum Beispiel, wenn in einem Rohransatz des Fußelements das Steckerteil eingesetzt ist und in dem Rohransatz der Tischplatte das Aufnahmeteil eingesetzt ist. Wenn in den beiden Standrohren jeweils an einem Rohrende ein Steckerteil und dem anderen Rohrende das Aufnahmeteil eingesetzt ist, lässt sich der Stehtisch in drei Positionen zusammensetzen. Eine erste Position ist die "Verstauposition" bei der die Tischplatte auf den Fuß gesteckt und geschraubt wird. Eine zweite Position ist die, in welcher ein Standrohr mit dem Fuß verbunden ist (erstes Rohrende im Steckerteil des Fußes) und die Tischplatte in das zweite Rohrende (Aufnahmeteil der Tischplatte im Steckerteil) gesteckt und gedreht wird. In der dritten Position sind zwischen der Tischplatte und dem Fuß beide Standrohre eingesetzt.

Bei einem solchen Stehtisch können unter der Tischplatte beliebige Befestigungen vorgesehen sein, um ein, zwei oder mehrere Standrohre daran zu befestigen.

Ein weiterer Vorteil der vorliegenden Erfindung ist, dass das männliche Steckerteil einen Befestigungsabschnitt zum Befestigen in dem zweiten Rohrende aufweist und einen Steckerabschnitt aufweist, der in einem im zweiten Rohrende befestigten Zustand des Befestigungsabschnitts über das zweite Rohrende vorsteht, wobei das Außengewinde an einem freien Ende des Steckabschnitts ausgebildet ist.

Dadurch ist es möglich, das Steckerteil fest mit einem Rohr zu verbinden und zwischen dem Außengewinde und dem Rohrende einen Abstand einzurichten. Durch die Tiefe, mit der der Rohrverbinder in die jeweiligen Rohrenden eindringt wird eine hohe Stabilität der Verbindung herbeigeführt.

Ein weiterer Vorteil ist vorzugsweise, dass zwischen dem Befestigungsabschnitt und dem Steckabschnitt ein sich radial erstreckender Stecker-Zentrierrand ausgebildet ist. Der sich radial erstreckende Stecker-Zentrierrand ist in der Praxis so bemessen, dass dieser bündig mit dem Außenumfang eines Rohrendes ist und somit auch mit einer Fläche auf dem Rohrende aufliegt. Dadurch wird verhindert, dass der Rohrverbinder zu tief in das Rohr eindringt.

Ein weiterer Vorteil der vorliegenden Erfindung ist, dass auch das Aufnahmeteil einen Aufnahme-Zentrierrand aufweist. Dieser erfüllt die gleiche Funktion wie der Stecker-Zentrierrand am Steckabschnitt.

Ein weiterer Vorteil ist vorzugsweise, dass der Stecker-Zentrierrand auf einer zum Steckabschnitt gewandten Stecker-Radialfläche einer Stecker-Zahnung aufweist und der Aufnahme-Zentrierrand auf einer dem Steckerteil zugewandten Aufnahme-Radialfläche eine Aufnahme-Zahnung aufweist, die in der maximalen Verbindungsstellung zusammenwirken.

Durch die Verzahnung wird die bereits durch den Stecker-Anschlag und den Aufnahme-Anschlag herbeigeführte Begrenzung der Schraubenlinie auch an einer dem Gewinde entfernt liegenden Stelle unterstützt.

Ein weiterer Vorteil ist vorzugsweise, dass die Stecker-Zahnung und die Aufnahme-Zahnung jeweils vier Zähne aufweisen, die auf der Stecker-Radialfläche und auf der Aufnahme-Radialfläche jeweils in gleichem Abstand zueinander angeordnet sind. Durch die Verteilung der Zähne um 90° Grad werden vier zusätzliche Anschläge geschaffen, welche die Kraftaufnahme des Stecker-Anschlags und des Aufnahme-Anschlags unterstützen.

Ein weiterer Vorteil ist vorzugsweise, dass die Zähne jeweils einen Zahnrücken aufweisen, der eine Steigung hat, der mit einer Steigung des Außengewindes übereinstimmt. Auf diese Weise wird die letzte Drehung um den letzten Gewindegang über die gesamte Länge auch an dem Stecker-Zentrierrand und dem Aufnahme-Zentrierrand unterstützt. Dies führt zu einer sehr genau geführten Schraubführung über die gesamte Länge des Steckerteils.

Ein weiterer Vorteil der vorliegenden Erfindung ist, dass der Stecker-Anschlag als Gangfüllung ausgebildet ist. Dadurch ist es möglich, den Stecker-Anschlag in bestimmten Herstellungsprozessen einfach dadurch herzustellen, das Material stehengelassen wird. Der Stecker-Anschlag ist dann einstückig und großflächig ausgebildet und daher sehr widerstandsfähig gegenüber Krafteinwirkungen.

Ein weiterer Vorteil der vorliegenden Erfindung ist, dass der Aufnahme-Anschlag ein als Kante ausgebildeter Gewindeanlauf ist. Gewindeanläufe sind regelmäßig mit einer Schräge versehen, um das Einfädeln der Gewinde zu erleichtern. Auch diese Erleichterung kann aber in sehr vielen Fällen verzichtet werden. Im vorliegenden Fall soll der Gewindeanlauf als Kante ausgebildet sein, die dann als Aufnahme-Anschlag mit dem Stecker-Anschlag zusammenwirkt, wenn die maximale Verbindungsstellung erreicht wird. Auf diese Weise muss kein separater Aufnahme-Anschlag ausgebildet werden.

Mit dem erfindungsgemäßen Rohrverbinder sollen Rohrelemente miteinander verbunden werden. Solche Rohrelemente haben zwei Enden. Zur Herstellung einer Verbindung können Rohrelemente verwendet werden, die im Sinne der vorliegenden Erfindung nur erste Rohrenden mit jeweils einem weiblichen Aufnahmeteil oder zweite Rohrenden mit einem männlichen Steckerteil aufweisen, wobei für die Verbindung dann jeweils ein Rohrelement mit ersten Rohrenden und ein Rohrelement mit zweiten Rohrenden miteinander verbunden werden. Alternativ und bevorzugt weist aber ein erstes Rohrende und ein zweites Rohrende auf, wobei sich in dem ersten Rohrende ein weibliches Aufnahmeteil dem zweiten Rohrende ein männliches Steckerteil befinden. So können dann zwei Rohrelemente jeweils nur das erste Rohrende und das zweite Rohrende des jeweiligen Rohrelements miteinander verbunden werden, wenn der erfindungsgemäße Rohrverbinder zum Einsatz kommt.

Rohrelemente mit einem ersten Rohrende und mit einem zweiten Rohrende kommen zum Beispiel bei Standmöbeln zu Einsatz. Bekannt sind solche Standmöbel mit einer Tischplatte, einem an einer unter der Tischplatte vorhandenen Rohransatz, einem Fuß mit einem Rohransatz und wenigstens mit zwei Standrohren, die bequem allein oder zusammen zwischen der Tischplatte und dem Fuß angeordnet werden können, wenn der erfindungsgemäße Rohrverbinder zum Einsatz kommt. So ist es besonders günstig, das Steckerteil des erfindungsgemäßen Rohrverbinders in den Rohransatz des Fußes und in jeweils ein zweites Rohrende der beiden Standrohre einzusetzen und das Aufnahmeteil im Rohransatz der Tischplatte und in jeweils das erste Rohrende der beiden Standrohre einzusetzen. Dann kann das Standmöbel in der bereits vorstehend beschriebenen Weise in drei Betriebspositionen zusammengesetzt werden.

Eine Ausführungsform der vorliegenden Erfindung wird im Folgenden anhand der Zeichnung näher beschrieben. Es zeigen:
Fig. 1 eine schematische Ansicht eines Steckerteils eines Rohrverbinders gemäß vorliegende Erfindung;
Fig. 2 eine perspektivische Ansicht des Aufnahmeteils des Rohrverbinders gemäß vorliegender Erfindung;
Fig. 3 eine Schnittdarstellung durch den Rohrverbinder;
Fig. 4 eine Ansicht von zwei mittels Rohrverbinder zusammengefügten Rohren.

Der Steckerteil 1 ist in der vorliegenden Ausführungsform rohrförmig ausgebildet und hat insgesamt einen runden Querschnitt, wobei die Querschnitte über die Länge des Steckerteils 1 unterschiedlich sind. In anderen Ausführungsformen kann der Steckerteil 1 auch in einigen Abschnitten zu einer Länge einen unrunden Querschnitt aufweisen, zum Beispiel einen eckigen Querschnitt.

In der vorliegenden Ausführungsform wird das Steckerteil 1 aus einem Kunststoffmaterial hergestellt. Es ist aber auch möglich, das Steckerteil 1 aus anderen Materialien, wie zum Beispiel Metall, Keramik, Holz, herzustellen.

Das Steckerteil 1 weist einen Befestigungsabschnitt 3 auf, der in einem Rohrende kraftschlüssig eingesetzt werden kann. Die Geometrie des Befestigungsteils 3 kann somit in Abhängigkeit von der Innengeometrie eines Rohrendes ausgebildet sein. Am Umfang des Befestigungsteils 3 sind mehrere Klemmrippen 5 ausgebildet, die durch Nuten 7 unterbrochen sind, in denen sich zum Beispiel abgeschabtes Material gesammelt werden kann.

Das Steckerteil 1 umfasst auch einen Steckabschnitt 9. Der Steckabschnitt 9 steht, wenn der Befestigungsabschnitt 3 in ein Rohrende kraftschlüssig eingesetzt ist, über das Rohrende vor. Der Steckabschnitt 9 ist mit einem runden Außenquerschnitt versehen und verjüngt sich vom Befestigungsabschnitt 3 in Richtung eines freien Endes 11. Am freien Ende 11 des Steckabschnitts 9 ist ein Außengewinde 13 ausgebildet. Das Außengewinde 13 ist einstückig aus dem Material des Steckabschnitts 9 gebildet. In der vorliegenden Ausführungsform ist das Außengewinde 13 ein Trapezgewinde.

Das Außengewinde 13 hat in der vorliegenden Ausführungsform einen Gewindegang 15 mit etwas mehr als vier Ganghöhen. Am Ende des Gewindegangs 15 ist ein Stecker-Anschlag 17 ausgebildet. Der Stecker-Anschlag 17 ist einstückig aus dem Material des Steckabschnitts 9 ausgebildet und vorzugsweise eine Gangfüllung, die sich über eine Reststrecke des Gewindegangs 15 erstreckt. Dies ist durch das Bezugszeichen 17 dargestellt. Zwischen dem Außengewinde 13 und dem Befestigungsabschnitt 3 bildet das Steckteil 9 einen Abstand mit einer im Wesentlichen glatten Umfangsfläche. In Längsrichtung des Steckteils 9 nimmt das Außengewinde 13 weniger als die Hälfte der Länge vom freien Ende 11 aus ein.

Zwischen dem Befestigungsabschnitt 3 und dem Steckabschnitt 9 befindet sich ein Stecker-Zentrierrand 19. Der Stecker-Zentrierrand 19 erstreckt sich radial von dem Befestigungsabschnitt 3 bzw. dem Steckabschnitt 9 aus und bildet den größten radialen Abstand zu einer Längsachse des Steckerteils 1. Der Stecker-Zentrierrand 19 ist zum Befestigungsabschnitt 3 hin abgestuft, so dass ein Außenumfang des Stecker-Zentrierrandes 19 bündig mit dem Außenumfang eines Rohrendes ist.

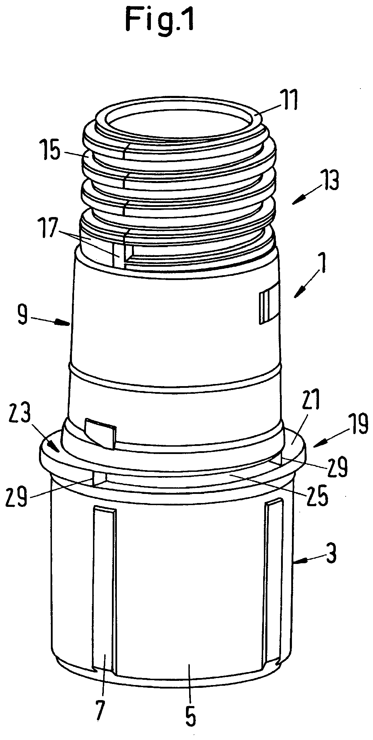

Zum Steckabschnitt 9 hin bildet der Stecker-Zentrierrand 19 eine Stecker-Radialfläche 21. Auf der Stecker-Radialfläche 21 ist eine Zahnung 23 ausgebildet. Die Zahnung 23 umfasst in der vorliegenden Ausführungsform vier Zähne von denen in Fig. 1 zwei Zähne dargestellt sind. Die Zähne sind in gleichem Abstand zueinander auf der Stecker-Radialfläche 21 ausgebildet. Jeder Zahn der Zahnung 23 hat einen steigenden Zahnrücken 25 und eine senkrechte Kante 29 zur Stecker-Radialfläche 19. Die Steigung jedes Zahnrückens 25 entspricht der Steigung des Außengewindes 13 und ist insbesondere identisch mit dieser.

Die vier Kanten 29 der Zahnung 23 unterstützen den Stecker-Anschlag 17, wie weiter unten beschrieben wird.

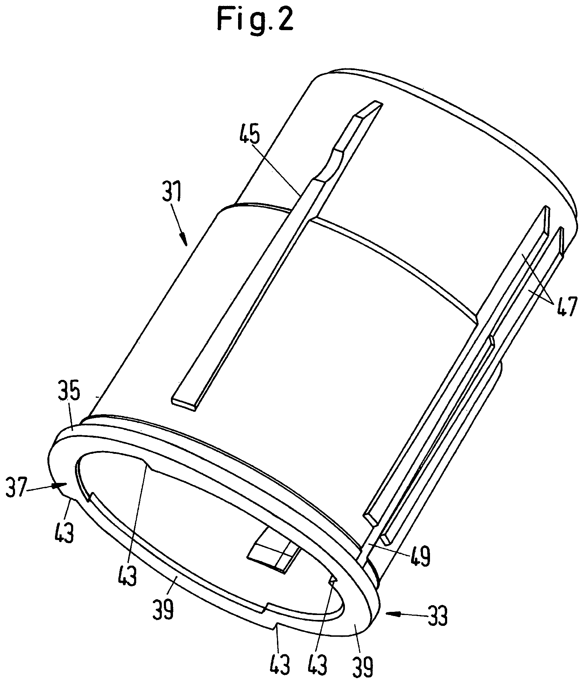

In Fig. 2 ist schematisch ein Anschlussteil 31 dargestellt, das zusammen mit dem Steckerteil 1 den erfindungsgemäßen Rohrverbinder bildet. Das Aufnahmeteil 31 hat ebenfalls einen runden Querschnitt und weist an einem Ende 33 einen Aufnahme-Zentrierrand 35 auf. Mit dem Aufnahme-Zentrierrand 35 wird das Aufnahmeteil 31 auf das Steckteil 9 gesetzt, um eine Verbindung mit diesem herzustellen. Damit eine Verbindung hergestellt werden kann, befindet sich in dem Aufnahme-Steckteil 31 ein Innengewinde (nicht dargestellt), das in das Außengewinde 13 des Steckteils 9 eingreifen kann. Das Innengewinde des Aufnahmeteils 31 hat einen Gewindeanlauf, der eine Kante (nicht dargestellt) bildet. Diese Kante ist ein Aufnahme-Anschlag, der am Ende eines Schraubvorgangs an den Stecker-Anschlag 17 anstößt und damit die maximale Verbindungsstellung festlegt.

Der Aufnahme-Zentrierrand 35 weist an einer im zusammengesteckten Zustand der Stecker-Radialfläche 21 zugewandten Seite eine Aufnahme-Radialfläche 37 auf, die eine Aufnahme-Zahnung 39 trägt. Die Aufnahme-Zahnung 39 hat ebenfalls vier Zähne mit jeweils einem Zahnrücken, der eine Steigung aufweist, die der Steigung des Innengewindes oder Außengewindes 13 entspricht, und jeweils mit einer Kante 43 die senkrecht zu der Aufnahme-Radialfläche 37 verläuft und in der maximalen Verbindungsstellung an jeweils eine Kante 25 der Stecker-Zahnung 23 anstößt.

Der Aufnahmeabschnitt 31 verjüngt sich ebenfalls von dem Aufnahme-Zentrierrand 35 in der Richtung seines entgegengesetzten Endes, das in montierten Zustand im inneren eines Rohres sitzt. An der Außenseite des Aufnahmeteils 31 sind Führungsrippen 45 und Doppelrippen 47 mit einer dazwischenliegenden Nut 49 zur Aufnahme einer Schweißnaht ausgebildet.

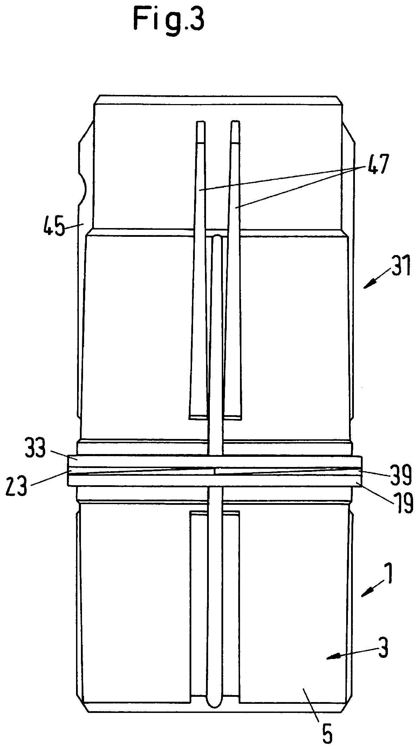

In Fig. 3 ist schematisch der Rohrverbinder der vorliegenden Erfindung mit einem zusammengesteckten und geschraubten Steckteil 9 und Aufnahmeteil 31 dargestellt.

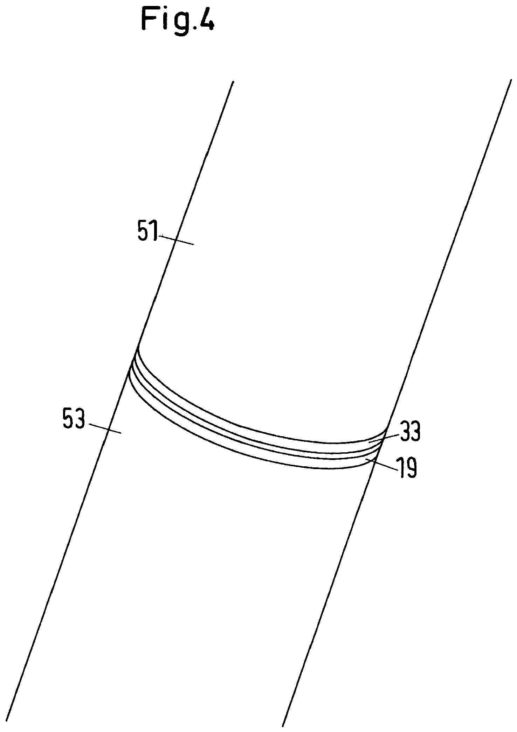

In Fig. 4 ist in einer Detailansicht dargestellt, wie ein erstes Rohrende 51 mit dem Aufnahmeteil 31 und ein zweites Rohrende 53 mit dem Steckerteil 1 im zusammengebauten Zustand aussieht.

## Patentansprüche

1. Rohrverbinder mit einem weiblichen Aufnahmeteil (31) zur Befestigung in einem ersten Rohrende (51) und mit einem männlichen Steckerteil (1) zum Befestigen in einem zweiten Rohrende (53), wobei das männliche Steckerteil (1) einen Steckabschnitt (9) und einen Befestigungsabschnitt (3) zum Befestigen in dem zweiten Rohrende (53) umfasst, wobei der Steckabschnitt (9) in einem im zweiten Rohrende (53) befestigten Zustand des Befestigungsabschnitts (3) über das zweite Rohrende (53) vorsteht, wobei das Aufnahmeteil (31) zur Aufnahme des Steckabschnitts (9) angepasst ist, wobei das männliche Steckerteil (1) ein Außengewinde (13) mit einem Gewindegang (15) aufweist und das weibliche Aufnahmeteil (31) ein Innengewinde aufweist, die ineinander eingreifen können, derart, dass eine maximale Verbindungsstellung erreicht wird und in der maximalen Verbindungsstellung ein Stecker-Anschlag (17) und ein Aufnahme-Anschlag aneinander anstoßen,und wobei das Außengewinde (13) an einem freien Ende (11) des Steckabschnitts (9) ausgebildet ist, **dadurch gekennzeichnet,**
**dass** der Stecker-Anschlag (17) einstückig aus dem Material des Steckabschnitts (9) hergestellt ist und eine Gangfüllung ist, die sich über eine Reststrecke des Gewindeganges (15) erstreckt und der Aufnahme-Anschlag ein als Kante ausgebildeter Gewindeanlauf ist .

2. Rohrverbinder nach Anspruch 1,
**dadurch gekennzeichnet,**
**dass** sich das Außengewinde (13) in Längsrichtung des Steckteils (9) weniger als die Hälfte der Länge vom freien Ende (11) aus erstreckt..

3. Rohrverbinder nach Anspruch 1 oder 2,
**dadurch gekennzeichnet,**
**dass** zwischen dem Befestigungsabschnitt (3) und dem Steckabschnitt (9) ein sich radial erstreckender Stecker-Zentrierrand (19) ausgebildet ist.

4. Rohrverbinder nach einem der Ansprüche 1 bis 3,
**dadurch gekennzeichnet,**
**dass** das Aufnahmeteil (31) einen Aufnahme-Zentrierrand (35) aufweist.

5. Rohrverbinder nach Anspruch 4,
**dadurch gekennzeichnet,**
**dass** der Stecker-Zentrierrand (19) auf einer zum Steckabschnitt (9) gewandten Stecker-Radialfläche (21) eine Stecker-Zahnung (23) aufweist und der Aufnahme-Zentrierrand (35) auf einer dem Steckerteil (1) zugewandten Aufnahme-Radialfläche (37) eine Aufnahme-Zahnung (39) aufweist, die in der maximalen Verbindungsstellung zusammenwirken.

6. Rohrverbinder nach Anspruch 5,
**dadurch gekennzeichnet,**
**dass** die Stecker-Zahnung (23) und die Aufnahme-Zahnung (39) jeweils vier Zähne aufweisen, die auf der Stecker-Radialfläche (21) und auf der Aufnahme-Radialfläche (37) jeweils in gleichem Abstand zueinander angeordnet sind.

7. Rohrverbinder nach Anspruch 6,
**dadurch gekennzeichnet,**
**dass** die Zähne jeweils einen Zahnrücken (25; 39) aufweisen, der eine Steigung hat, die mit einer Steigung des Außengewindes (13) übereinstimmt.

8. Rohrverbinder nach einem der vorstehenden Ansprüche,
**dadurch gekennzeichnet,**
**dass** das Außengewinde (13) und das Innengewinde jeweils als Trapezgewinde ausgebildet sind.

9. Rohrverbinder nach einem der vorstehenden Ansprüche,
**dadurch gekennzeichnet,**
**dass** das Innengewinde eine einzige Ganghöhe hat.

10. Rohrverbinder nach einem der vorstehenden Ansprüche,
**dadurch gekennzeichnet,**
**dass** das Außengewinde (13) vier Ganghöhen hat.

11. Rohrverbinder nach einem der vorstehenden Ansprüche,
**dadurch gekennzeichnet,**
**dass** der weibliche Aufnahmeteil (31) und der männliche Steckerteil (1) aus Kunststoff hergestellt sind.

12. Rohrverbinder nach einem der vorstehenden Ansprüche,
**dadurch gekennzeichnet,**
**dass** der weibliche Aufnahmeteil (31) und der männliche Steckerteil (1) kraftschlüssig in einem ersten bzw. zweiten Rohrende (51; 53) aufnehmbar sind.

## Claims

1. Pipe connector with a female receiving section (31) for fastening in a first pipe end (51) and with a male plug part (1) for fastening in a second pipe end (53) wherein the male plug part (1) comprises a plug section (9) and a fastening section (3) for fastening in a second pipe end (53), wherein the plug section (9) when the fastening section (3) is fastened in the second pipe end (53) protrudes beyond the second pipe end (53), wherein the receiving part (31) is adapted for receiving the plug section (9), wherein the male plug part (1) has an external thread (13) with a thread turn (15) and the female receiving part (31) has an internal thread which can engage in each other in such a way that a maximum connection is position is achieved and in the maximum connection position a plug stop (17) and a receiving stop come into contact with each other, and wherein the external thread (13) is provided at a free end (11) of the plug section (9), **characterised in that** the plug stop (17) is produced in one piece out of the material of the plug section (9) and is a turn filling which extends over the residual section of the thread turn (15) and the receiving stop is thread run-in formed as an edge.

2. Pipe connector according to claim 1 **characterised in that** in the longitudinal direction of the plug part (9) the outer thread (13) extends over less than half the length from the free end (11).

3. Pipe connector according to claim 1 or 2 **characterised in that** between the fastening section (3) and the plug section (9) a radially extending plug centring edge (19)is formed.

4. Pipe connector according any one of claims 1 to 3 **characterised in that** the receiving part (31) has a receiving centring edge (35).

5. Pipe connector according to claim 4 **characterised in that** on a plug radial surface (21) facing the plug section (9) the plug centring edge (19) has a plug toothing (23) and the receiving centring edge (35) on a receiving radial surface (37) facing the plug part (1) has a receiving toothing (39) which interact in the maximum connection position.

6. Pipe connector according to claim 5 **characterised in that** the plug toothing (23) and the receiving toothing (39) each have four teeth which on the plug radial surface (21) and on the receiving radial surface (37) are each arranged at the same distance from each other.

7. Pipe connector according to claim 6 **characterised in that** the teeth each have a tooth back (25; 39) which has a pitch which corresponds to the pitch of the outer thread (13).

8. Pipe connector according to any one of the preceding claims **characterised in that** the outer thread (13) and the inner thread are each designed as trapezoidal threads.

9. Pipe connector according to any one of the preceding claims **characterised in that** the inner thread had a single turn height.

10. Pipe connector according to any one of the preceding claims **characterised in that** the outer thread (13) has four turn heights.

11. Pipe connector according to any one of the preceding claims **characterised in that** the female receiving part (31) and the male plug part (1) are made of plastic.

12. Pipe connector according to any one of the preceding claims **characterised in that** the female receiving part (31) and the male plug part (1) can be received in a first and a second pipe end (51; 53) in a friction-fitted manner.

## Revendications

1. Raccord de tuyaux avec une partie de logement (31) femelle, destinée à être fixée dans une première extrémité (51) de tuyau et avec une partie de connecteur (1) mâle, destinée à être fixée dans une deuxième extrémité (53) de tuyau, la partie connecteur (1) mâle comportant un tronçon connecteur (9) et un tronçon de fixation (3) destiné à être fixé dans la deuxième extrémité (53) de tuyau, lorsque le tronçon de fixation (3) est fixé dans la deuxième extrémité (53) de tuyau, le tronçon connecteur (9) saillant pardessus la deuxième extrémité (53) de tuyau, la partie de logement (31) étant adaptée pour loger le tronçon connecteur (9), la partie connecteur (1) mâle comportant un filetage (13), avec un pas de filet (15) et la partie de logement (31) femelle comportant un taraudage, qui sont susceptibles de s'engager l'un dans l'autre, de telle sorte qu'il soit atteint une position d'assemblage maximal et dans la position d'assemblage maximal, une butée (17) d'enfichage et une butée de logement s'aboutent,
et le filetage (13) étant conçu sur une extrémité libre (11) du tronçon connecteur (9), **caractérisé en ce que**
la butée (17) d'enfichage est fabriquée en monobloc dans la matière du tronçon connecteur (9) et est un remplissage de filet qui s'étend sur un trajet résiduel du pas de filet (15) et **en ce que** la butée de logement est un départ de taraudage conçu en tant qu'arête.

2. Raccord de tuyaux selon la revendication 1,
**caractérisé en ce que** dans la direction longitudinale du tronçon connecteur (9), le filetage (13) s'étend sur moins de la moitié de la longueur de l'extrémité libre (11).

3. Raccord de tuyaux selon la revendication 1 ou la revendication 2,
**caractérisé en ce qu'**entre le tronçon de fixation (3) et le tronçon connecteur (9) est conçu un bord de centrage (19) du connecteur s'étendant en direction radiale.

4. Raccord de tuyaux selon l'une quelconque des revendications 1 à 3,
**caractérisé en ce que** la partie de logement (31) comporte un bord de centrage (35) du logement.

5. Raccord de tuyaux selon la revendication 4,
**caractérisé en ce que** sur une surface radiale (21) du connecteur dirigée vers le tronçon connecteur (9), le bord de centrage (19) du connecteur comporte une denture (23) de connecteur et sur une surface radiale (37) de logement dirigée vers la partie connecteur (1), le bord de centrage (35) du logement comporte une denture (39) de logement, qui dans la position d'assemblage maximal coopèrent.

6. Raccord de tuyaux selon la revendication 5,
**caractérisé en ce que** la denture (23) de connecteur et la denture (39) de logement comportent chacune quatre dents qui sur la surface radiale (21) du connecteur et sur la surface radiale (37) du logement sont chaque fois placées avec un écart mutuel identique.

7. Raccord de tuyaux selon la revendication 6,
**caractérisé en ce que** les dents comportent chacune un dos de dent (25 ; 39) qui a un pas qui coïncide avec le pas du filetage (13).

8. Raccord de tuyaux selon l'une quelconque des revendications précédentes,
**caractérisé en ce que** le filetage (13) et le taraudage sont conçus chacun en tant que filet trapézoïdal.

9. Raccord de tuyaux selon l'une quelconque des revendications précédentes,
**caractérisé en ce que** le taraudage a une unique hauteur de pas.

10. Raccord de tuyaux selon l'une quelconque des revendications précédentes,
**caractérisé en ce que** le filetage (13) a quatre hauteurs de pas.

11. Raccord de tuyaux selon l'une quelconque des revendications précédentes,
**caractérisé en ce que** la partie de logement (31) femelle et la partie connecteur (1) mâle sont fabriquées en matière plastique.

12. Raccord de tuyaux selon l'une quelconque des revendications précédentes,
**caractérisé en ce que** la partie de logement (31) femelle et la partie connecteur (1) mâle peuvent être logées par complémentarité de force dans une première ou une deuxième extrémités de tuyau (51 ; 53).
